# EUROPÄISCHE PATENTSCHRIFT

(11) **EP 2 820 711 B1**
(45) Veröffentlichungstag und Bekanntmachung des Hinweises auf die Patenterteilung: **13.04.2016**
(21) Anmeldenummer: 13707157.7
(22) Anmeldetag: 27.02.2013
(51) Int. Cl.: H01G 11/06, H01G 11/62, H01M 10/052, H01M 10/0568, H01G 11/60, H01M 10/0525, H01M 10/0569

(54) **LEITSALZ FÜR LITHIUM-BASIERTE ENERGIESPEICHER**
CONDUCTING SALT FOR LITHIUM-BASED ENERGY STORAGE DEVICE
SEL CONDUCTEUR POUR DISPOSITIF DE STOCKAGE D'ÉNERGIE À BASE DE LITHIUM

(30) Priorität: 29.02.2012 DE 102012101669
(43) Veröffentlichungstag der Anmeldung: 07.01.2015
(73) Patentinhaber: Westfälische Wilhelms-Universität Münster, 48149 Münster (DE)
(72) Erfinder: AMERELLER, Marius, 48153 Münster (DE); SCHMITZ, René, 68163 Mannheim (DE); SCHMITZ, Raphael Wilhelm, 48151 Münster (DE); MÜLLER, Romek Ansgar, 48455 Bad Bentheim (DE); WINTER, Martin, 48149 Münster (DE); PASSERINI, Stefano, 48149 Münster (DE); SCHREINER, Christian, 86485 Biberbach (DE); KUNZE, Miriam, 37444 St. Andreasberg (DE)
(74) Vertreter: Michalski Hüttermann & Partner Patentanwälte mbB
(86) Internationale Anmeldenummer: PCT/EP2013/053945
(87) Internationale Veröffentlichungsnummer: WO 2013/127864

(56) Entgegenhaltungen:
- US-A1- 2002 197 558
- US-A1- 2007 066 822
- R. ARVAI ET AL: "New aryl-containing fluorinated sulfonic acids and their ammonium salts, useful as electrolytes for fuel cells or ionic liquids", JOURNAL OF FLUORINE CHEMISTRY, Bd. 129, Nr. 10, 1. Oktober 2008 (2008-10-01), Seiten 1029-1035, XP025468252, ISSN: 0022-1139, DOI: 10.1016/J.JFLUCHEM.2008.06.009 [gefunden am 2008-06-20]

## Beschreibung

Die Erfindung betrifft ein Leitsalz sowie einen Elektrolyten für Lithium-basierte Energiespeicher.

Die Lithium-Ionen-Technologie ist die führende Technologie auf dem Gebiet der wiederaufladbaren Batteriespeichersysteme für die portable Elektronik. Aufgrund ihrer hohen Zellspannung, ihrer überlegenen Energie- und Leistungsdichte sowie ihrer ausgesprochen niedrigen Selbstentladung haben Lithium-Ionen Batterien ein hohes Potential für diese Anwendungen. Derzeit wird in kommerziell erhältlichen Lithium-Ionen Batterien Lithiumhexafluorphosphat (LiPF₆) als Leitsalz verwendet. Lithiumhexafluorphosphat weist eine relativ hohe Leitfähigkeit auf, hat jedoch erhebliche Nachteile aufgrund einer geringen thermischen und chemischen Stabilität und seiner Hydrolyseempfindlichkeit. So ist bekannt, dass sich LiPF₆ mit Spuren von Wasser und anderen protischen Verbindungen wie Alkoholen, die in Lithium-Batterien nicht gänzlich vermeidbar sind und beispielsweise im ppm-Bereich in Lösungsmitteln vorkommen, reagiert. Diese Reaktion wird durch mäßig erhöhte Temperaturen beschleunigt. Dadurch kommt es zu einem schnellen Verlust der Kapazität der Zelle, was sich in einer verkürzten Lebensdauer auswirkt.

Daher gibt es intensive Bemühungen, alternative Lithiumsalze zu entwickeln, die LiPF₆ als Leitsalz ersetzen können. Die in den letzten Jahren entwickelten Lithiumsalze sind häufig komplexe Bor- oder Phosphorhaltige Anionen mit nicht-aromatischen Chelatbildnern wie Oxalat, beispielsweise das in der DE 198 29 030 C1 offenbarte Lithium-Bis(oxalato)borat

(LiBOB). Nachteilig ist jedoch, dass Bis(oxalato)borat eine nur geringe Löslichkeit in den üblichen als Lösungsmittel in Elektrolyten verwendeten Carbonaten aufweist. Weiter weisen LiBOB-basierte Elektrolyte im Vergleich zu LiPF₆ eine geringere Leitfähigkeit, insbesondere bei niedrigen Temperaturen, und eine höhere Viskosität auf.

In Journal of Fluorine Chemistry, Bd. 129, Nr. 10, 2008, S. 1029-1035, werden neue Aryl-enthaltende fluorierte Sulfonsäuren und deren Ammoniumsalze offenbart, die als Elektrolyte für Brennstoffzellen oder ionische Flüssigkeiten verwendbar sind.

US 2007/0066822 A1 offenbart Zusammensetzungen der Formel Z⁺A⁻, wobei Z⁺ ein Kation ist ausgewählt aus der Gruppe bestehend aus Pyridinium, Pyridazinium, Pyrimidinium, Pyrazinium, Imidazolium, Pyrazolium, Thiazolium, Oxazolium, Triazolium, und Phosphonium, sowie Ammoniumkationen mit spezifizierten Substituenten, und A- ausgewählt ist aus der Gruppe bestehend aus den drei Anionen R¹¹-CHF-CF₂-SO₃⁻, R¹²-CF₂-CF₂-SO₃⁻ und (R¹³-CHF-CF₂-SO₂)₂N⁻ mit spezifizierten Resten R¹¹, R¹² und R¹³, die als ionische Flüssigkeit verwendbar sind.

US 2002/0197558 A1 offenbart photoaktive Verbindungen der Formel R-O(CF₂)ₙSO₃X, wobei n eine Zahl von 1 bis 4 ist; R ausgewählt ist aus der Gruppe bestehend aus: substitutiertes oder unsubstituiertes C₁-C₁₂ lineares oder verzweigtes Alkyl oder Alkenyl, substitutiertes oder unsubstituiertes Aralkyl, substitutiertes oder unsubstituiertes Aryl, substitutiertes oder unsubstituiertes Bicycloalkyl, substitutiertes oder unsubstituiertes Tricycloalkyl, Wasserstoff, Alkylsulfonsäure, substitutiertes oder unsubstituiertes Perfluoroalkyl der allgemeinen Struktur F((CF₂)₂O)ₘ(CF₂)_{q}, wobei p zwischen 1 bis 4 ist, m zwischen 0 bis 3 ist und q zwischen 1 bis 4 ist, und substitutiertes oder unsubstituiertes teilweise fluoriertes Alkyl, Halofluoralkyl, Perfluoroalkylsulfon, oder Glycidyl; und X ausgewählt ist aus der Gruppe bestehend aus: organische Kationen und kovalent gebundene organische Reste.

Trotz einer Vielzahl an Salzen und Lösungsmitteln wurde noch kein geeigneter Ersatz für LiPF₆ als Leitsalz in Carbonatgemischen gefunden. Daher besteht ein Bedarf an alternativen Lithiumsalzen für die Verwendung in Lithium-Ionen Batterien.

Der vorliegenden Erfindung lag daher die Aufgabe zu Grunde, eine Verbindung zur Verfügung zu stellen, die mindestens einen der vorgenannten Nachteile des Standes der Technik überwindet. Insbesondere lag der vorliegenden Erfindung die Aufgabe zu Grunde, eine als Leitsalz geeignete Lithiumverbindung zur Verfügung zu stellen.

Diese Aufgabe wird gelöst durch einen Elektrolyten für einen Lithium-basierten Energiespeicher umfassend Lithium-2-pentafluoroethoxy-1,1,2,2-tetrafluor-ethansulfonat.

Ein weiterer Gegenstand der Erfindung betrifft die Verwendung von Lithium-2-pentafluoroethoxy-1,1,2,2-tetrafluor-ethansulfonat als Leitsalz in Elektrolyten für Lithium-basierte Energiespeicher.

Lithium-2-pentafluoroethoxy-1,1,2,2-tetrafluor-ethansulfonat wird auch als Lithium-1,1,2,2-tetrafluoro-2-(Pentafluoroethoxy)ethansulfonat bezeichnet.

Überraschend wurde gefunden, dass Zellen, in denen Elektrolyte, die Lithium-2-pentafluoroethoxy-1,1,2,2-tetrafluor-ethansulfonat als Leitsalz enthalten, verwendet wurden, eine hervorragende Zyklenstabilität zeigen. Von Vorteil ist weiterhin, dass Lithium-2-pentafluoroethoxy-1,1,2,2-tetrafluor-ethansulfonat eine gute Lithium-Ionen Leitfähigkeit und eine hohe elektrochemische Stabilität aufweist. Weiter ist Lithium-2-pentafluoroethoxy-1,1,2,2-tetrafluor-ethansulfonat in einem weiten Temperaturbereich verwendbar.

Darüber hinaus ist ein großer Vorteil von Lithium-2-pentafluoroethoxy-1,1,2,2-tetrafluor-ethansulfonat dessen geringe Hydrolyseempfindlichkeit. Hierdurch kann im Gegensatz zu Elektrolyten, die LiPF₆ als Leitsalz verwenden, eine erhebliche Verbesserung der Betriebssicherheit zur Verfügung gestellt werden. In insbesondere vorteilhafter Weise ermöglicht dies eine Verwendung im Hochtemperaturbereich.

Weiter zeigt Lithium-2-pentafluoroethoxy-1,1,2,2-tetrafluor-ethansulfonat in einem Gemisch aus Ethylencarbonat, gamma-Butyrolacton und Fluoroethylencarbonat eine anodische Stabilität von 5,97 V, die eine Verwendung mit Hochvoltkathodenmaterialien erlaubt. Insbesondere zeigen Korrosionsmessungen, dass Lithium-2-pentafluoroethoxy-1,1,2,2-tetrafluor-ethansulfonat keine Korrosion des an der Kathodenseite als Stromsammler eingesetzten Aluminiums zeigt, sondern wie LiPF₆ eine Schutzschicht auf Aluminium ausbildet. Lithium-2-pentafluoroethoxy-1,1,2,2-tetrafluor-ethansulfonat ist daher in vorteilhafter Weise als Leitsalz für kommerzielle Lithium-Ionen Batterien geeignet.

Der Elektrolyt in Lithium-basierten elektrochemischen Energiespeichern besorgt den Ladungstransport. Das Leitsalz eines flüssiger Elektrolyten liegt daher vorzugsweise in einem Lösungsmittel gelöst vor. Der Elektrolyt umfasst Lithium-2-pentafluoroethoxy-1,1,2,2-tetrafluor-ethansulfonat vorzugsweise gelöst in einem organischen Lösungsmittel. Der Elektrolyt ist beispielsweise herstellbar durch Einbringen und Lösen von Lithium-2-pentafluoroethoxy-1,1,2,2-tetrafluor-ethansulfonat in ein Lösungsmittel oder ein Lösungsmittelgemisch.

In bevorzugten Ausführungsformen liegt die Konzentration an Lithium-2-pentafluoroethoxy-1,1,2,2-tetrafluor-ethansulfonat im Elektrolyten im Bereich von ≥ 0,1 M bis ≤ 2 M, vorzugsweise im Bereich von ≥ 0,5 M bis ≤ 1,5 M, besonders bevorzugt im Bereich von ≥ 0,7 M bis ≤ 1,2 M. In einer besonders bevorzugten Ausführungsform liegt die Konzentration an Lithium-2-pentafluoroethoxy-1,1,2,2-tetrafluor-ethansulfonat im Elektrolyten bei 1 M. In vorteilhafter Weise führen solche Konzentrationen an Lithium-2-pentafluoroethoxy-1,1,2,2-tetrafluor-ethansulfonat zu einer guten Leitfähigkeit.

In bevorzugten Ausführungsformen umfasst der Elektrolyt ein organisches Lösungsmittel, eine ionische Flüssigkeit und/oder eine Polymermatrix.

Vorzugsweise umfasst ein Elektrolyt Lithium-2-pentafluoroethoxy-1,1,2,2-tetrafluor-ethansulfonat und ein organisches Lösungsmittel. Es konnte festgestellt werden, dass Lithium-2-pentafluoroethoxy-1,1,2,2-tetrafluor-ethansulfonat in organischen Lösungsmitteln insbesondere in cyclischen oder linearen Carbonaten eine gute Löslichkeit aufweist. Dies ermöglicht in vorteilhafter Weise die Verwendung von Lithium-2-pentafluoroethoxy-1,1,2,2-tetrafluor-ethansulfonat in den in kommerziellen Lithium-Ionen Batterien eingesetzten Flüssigelektrolyten.

In bevorzugten Ausführungsformen ist das organische Lösungsmittel ausgewählt aus der Gruppe umfassend Ethylencarbonat, Propylencarbonat, Diethylcarbonat, Dimethylcarbonat, Ethylmethylcarbonat, Acetonitril, Glutaronitril, Adiponitril, Pimelonitril, gamma-Butyrolacton, gamma-Valerolacton, Dimethoxyethan, 1,3-Dioxolan, Methylacetat und/oder Mischung davon. Geeignete organische Lösungsmittel sind insbesondere ausgewählt aus der Gruppe umfassend cyclische Carbonate wie Ethylencarbonat und Propylencarbonat und/oder lineare Carbonate wie Diethylcarbonat, Dimethylcarbonat und Ethylmethylcarbonat. Vorzugsweise ist das organische Lösungsmittel ausgewählt aus der Gruppe umfassend Ethylencarbonat, Diethylcarbonat, Dimethylcarbonat, Ethylmethylcarbonat und/oder deren Mischungen.

Ein bevorzugtes Lösungsmittel ist Ethylencarbonat. Ethylencarbonat wird gemäß der IUPAC-Nomenklatur auch als 1,3-Dioxolan-2-on bezeichnet . Ethylencarbonat ist kommerziell erhältlich. Ethylencarbonat weist einen hohen Siedepunkt und einen hohen Flammpunkt auf. Weiter vorteilhaft ist, dass Ethylencarbonat eine hohe Leitfähigkeit durch eine gute Salzdissoziation ermöglicht.

In einer bevorzugten Ausführungsform umfasst das organische Lösungsmittel eine Mischung aus Ethylencarbonat und wenigstens einem weiteren organischen Lösungsmittel, vorzugsweise gamma-Butyrolacton. Bevorzugt sind auch binäre Mischungen von Carbonaten, insbesondere von Ethylencarbonat mit einem weiteren Carbonat, beispielsweise Diethylcarbonat, Dimethylcarbonat und/oder Ethylmethylcarbonat, insbesondere Diethylcarbonat.

Bevorzugt liegt das Verhältnis von Ethylencarbonat und dem wenigstens einen weiteren organischen Lösungsmittel, vorzugsweise gamma-Butyrolacton, im Bereich von ≥ 1:99 bis ≤ 99:1, bevorzugt im Bereich von ≥ 1:9 bis ≤ 9:1, vorzugsweise im Bereich von ≥ 3:7 bis ≤ 1:1. Wenn nicht abweichend angegeben bezieht sich das angegebene Verhältnis auf die Gewichtsanteile der Lösungsmittel. In einem Lösungsmittelgemisch von Ethylencarbonat und Diethylcarbonat im Verhältnis 1:1 konnte in vorteilhafter Weise eine hohe Leitfähigkeit in einem Temperaturbereich von -25°C bis +60°C erreicht werden.

Bevorzugt sind auch ternäre Mischungen, umfassend wenigstens ein Carbonat als Lösungsmittel. Insbesondere bevorzugt sind Mischungen von Ethylencarbonat mit einem weiteren Lösungsmittel beispielsweise gamma-Butyrolacton und einer Verbindung, die geeignet ist, eine sogenannte Solid Electrolyte Interphase (SEI), eine Feststoff-Elektrolyt-Grenzfläche, auszubilden. Der Elektrolyt kann daher ferner Additive, insbesondere filmbildende Elektrolytadditive, umfassen.

In bevorzugten Ausführungsformen umfasst der Elektrolyt eine Verbindung ausgewählt aus der Gruppe umfassend Chlorethylencarbonat, Fluorethylencarbonat, Vinylethylencarbonat, Ethylensulfit, Ethylensulfat, Propansulfonate, Sulfite, vorzugsweise Dimethylsulfit und Propylensulfit, Sulfate, optional mit F, Cl oder Br substituierte Butyrolactone, Phenylethylencarbonat, Vinylacetat und/oder Trifluorpropylencarbonat.

Von den Verbindungen auf Carbonat-Basis sind mit Chlor oder Fluor substituierte Carbonate bevorzugt, insbesondere Fluorethylencarbonat (FEC). Die Verbindungen können die Batterieleistung verbessern, beispielsweise die Kapazität oder die Zyklenlebensdauer. Insbesondere Fluorethylencarbonat kann zu einer verbesserten Langzeitstabilität einer Zelle führen.

Vorzugsweise enthält der Elektrolyt ein Additiv, insbesondere eine Verbindung ausgewählt aus der Gruppe umfassend Chlorethylencarbonat, Fluorethylencarbonat, Vinylethylencarbonat, Ethylensulfit, Ethylensulfat, Propansulfonate, Sulfite, vorzugsweise Dimethylsulfit und Propylensulfit, Sulfate, optional mit F, Cl oder Br substituierte Butyrolactone, Phenylethylencarbonat, Vinylacetat und/oder Trifluorpropylencarbonat, vorzugsweise Fluorethylencarbonat, im Bereich von ≥ 0,1 Gew.-% bis ≤ 10 Gew.-%, bevorzugt im Bereich von ≥ 1 Gew.-% bis ≤ 5 Gew.-%, vorzugsweise im Bereich von ≥ 2 Gew.-% bis ≤ 3 Gew.-%, bezogen auf das Gesamtgewicht des Elektrolyts.

Bevorzugt umfasst das organische Lösungsmittel eine Mischung aus Ethylencarbonat und wenigstens einem weiteren organischen Lösungsmittel, vorzugsweise ausgewählt aus der Gruppe umfassend gamma-Valerolacton oder gamma-Butyrolacton und Fluorethylencarbonat.

Bevorzugt liegt das Verhältnis von Ethylencarbonat und dem wenigstens einen weiteren organischen Lösungsmittel, vorzugsweise gamma-Valerolacton oder gamma-Butyrolacton, und einem Additiv, vorzugsweise Fluorethylencarbonat, im Bereich von ≥ 98:1:1 bis ≤ 1:1:98, bevorzugt im Bereich von ≥ 80:15:5 bis ≤ 15:80:5, vorzugsweise im Bereich von ≥ 4,5:4,5:1 bis ≤ 9,5:9,5:1. Wenn nicht abweichend angegeben bezieht sich das angegebene Verhältnis auf die Gewichtsanteile.

Besonders bevorzugt umfasst das organische Lösungsmittel eine Mischung aus Ethylencarbonat, gamma-Butyrolacton und Fluorethylencarbonat, insbesondere in einem Verhältnis von 4,5:4,5:1. In einem Lösungsmittelgemisch umfassend Ethylencarbonat, gamma-Butyrolacton und Fluorethylencarbonat in einem Verhältnis von 4,5:4,5:1 konnte in vorteilhafter Weise ein verbessertes Betriebsverhalten bei Belastungstests und ein verbessertes Verhalten der Zelle in den ersten Zyklen festgestellt werden. So kann Fluorethylencarbonat eine Schutzschicht auf einer Graphitanode ausbilden und Überpotentiale der Elektrode senken.

Als vielversprechende Lösungsmittel haben sich weiterhin ionische Flüssigkeiten erwiesen, da diese eine hohe thermische wie elektrochemische Stabilität mit einer hohen ionischen Leitfähigkeit vereinen. Insbesondere ist dies vorteilhaft zur Verwendung mit Lithium-2-methoxy-1,1,2,2-tetrafluor-ethansulfonat. Bevorzugte ionische Flüssigkeiten umfassen ein Kation ausgewählt aus der Gruppe umfassend 1-Ethyl-3-methylimidazolium (EMI⁺), 1,2-Dimethyl-3-propylimidazolium (DMPI⁺), 1,2-Diethyl-3,5-dimethylimidazolium (DEDMI⁺), Trimethyl-*n*-hexylammonium (TMHA⁺), *N*-alkyl-*N*-methylpyrrolidinium (PYR_{1R}⁺), *N*-alkyl-*N*-methylpiperidinium (PIP_{1R}⁺) und/oder *N*-alkyl-*N-*methylmorpholinium (MORP_{1R}⁺) und ein Anion ausgewählt aus der Gruppe umfassend Bis(trifluormethansulfonyl)imid (TFSI⁻), Bis(pentafluorethansulfonyl)imid (BETI⁻), Bis(fluorsulfonyl)imid (FSI⁻), 2,2,2-Trifluor-*N-*(trifluormethansulfonyl)acetamid (TSAC⁻), Tetrafluorborat (BF₄⁻), Pentafluorethanetrifluoroborate (C₂F₅BF₃⁻), Hexafluorphosphat (PF₆⁻) und/oder Tri(pentafluorethan)trifluorphosphat ((C₂F₅)₃PF₃⁻). Bevorzugte *N*-alkyl-*N-*methylpyrrolidinium (PYR_{1R}⁺) Kationen sind ausgewählt aus der Gruppe umfassend N-butyl-N-methylpyrrolidinium (PYR₁₄⁺) und/oder N-methyl-N-propylpyrrolidinium (PYR₁₃⁺). Bevorzugte ionische Flüssigkeiten sind ausgewählt aus der Gruppe umfassend N-butyl-N-methylpyrrolidiniumbis(trifluoromethansulfonyl)imid (PYR₁₄TFSI) und/oder N-methyl-N-propylpyrrolidiniumbis(trifluoromethansulfonyl)imid (PYR₁₃TFSI).

Weitere geeignete Elektrolytmaterialien sind Polymerelektrolyte, wobei der Polymerelektrolyt als Gelpolymerelektrolyt oder fester Polymerelektrolyt vorliegen kann. Feste Polyelektrolyte zeigen gute Eigenschaften bezüglich der Anforderungen an zukünftige Akkumulatorgenerationen. Sie ermöglichen einen solvensfreien Aufbau, der einfach herzustellen und vielfältig in der Form ist. Darüber hinaus kann die Energiedichte gesteigert werden, denn es entfällt der Dreischichtaufbau aus Elektrolyt-Separator-Elektrolyt, sodass lediglich eine dünne Polymerfolie zwischen den Elektroden benötigt wird. Festelektrolyte sind in der Regel chemisch und elektrochemisch stabil gegenüber Elektrodenmaterialien und treten weiterhin nicht aus der Zelle aus. Gelpolymerelektrolyte umfassen meist ein aprotisches Lösungsmittel und eine Polymermatrix.

Bevorzugte Polymere für feste Polymerelektrolyte und Gelpolymerelektrolyte sind ausgewählt aus der Gruppe umfassend Homo- oder Copolymere von Polyethylenoxid (PEO), Polypropylenoxid (PPO), Polyvinylidenfluorid (PVdF), Polyvinylidenfluoridhexafluorpropylen (PVdF-HFP), Polyacrylnitril (PAN), Polymethylmethacrylat (PMMA), Polyethylmethacrylat (PEMA), Polyvinylacetat (PVAc), Polyvinylchlorid (PVC), Polyphophazene, Polysiloxane, Polyvinylalkohol (PVA) und/oder Homo- und (Block-) Copolymere umfassend funktionelle Seitenketten ausgewählt aus der Gruppe umfassend Ethylenoxid, Propylenoxid, Acrylnitril und/oder Siloxane.

Ein weiterer Gegenstand der Erfindung betrifft einen Lithium-basierten Energiespeicher, vorzugsweise eine Lithium-Batterie, Lithium-Ionen-Batterie, Lithium-Ionen-Akkumulator, Lithium-Polymer-Batterie oder Lithium-Ionen-Kondensator umfassend Lithium-2-pentafluoroethoxy-1,1,2,2-tetrafluor-ethansulfonat. Ein weiterer Gegenstand der Erfindung betrifft einen Lithium-basierten Energiespeicher, vorzugsweise eine Lithium-Batterie, Lithium-Ionen-Batterie, Lithium-Ionen-Akkumulator, Lithium-Polymer-Batterie oder Lithium-Ionen-Kondensator, umfassend einen erfindungsgemäßen Elektrolyten umfassend Lithium-2-methoxy-1,1,2,2-tetrafluor-ethansulfonat.

Die Lithium-basierten Energiespeicher eignen sich für alle Anwendungsgebiete, insbesondere auch für größere Systeme wie Automobile oder als stationäre Energiespeicher für erneuerbare Energien.

Lithium-2-pentafluoroethoxy-1,1,2,2-tetrafluor-ethansulfonat ist kommerziell erhältlich oder nach üblichen Synthesemethoden herstellbar.

Lithium-2-pentafluoroethoxy-1,1,2,2-tetrafluor-ethansulfonat ist als Leitsalz in Elektrolyten für Lithium-basierte Energiespeicher verwendbar. Ein weiterer Gegenstand der vorliegenden Erfindung betrifft die Verwendung von Lithium-2-pentafluoroethoxy-1,1,2,2-tetrafluor-ethansulfonat in Lithium-basierten Energiespeichern. In vorteilhafter Weise kann durch Verwendung von Lithium-2-pentafluoroethoxy-1,1,2,2-tetrafluor-ethansulfonat in Lithium-basierten Energiespeichern ein hydrolysestabiles Leitsalz zur Verfügung gestellt werden. Hierdurch ist eine Zelle in einem erweiterten Temperaturbereich verwendbar.

Vorzugsweise ist Lithium-2-pentafluoroethoxy-1,1,2,2-tetrafluor-ethansulfonat in Elektrolyten in einer Konzentration im Bereich von ≥ 0,1 M bis ≤ 2 M, vorzugsweise im Bereich von ≥ 0,5 M bis ≤ 1,5 M, besonders bevorzugt im Bereich von ≥ 0,7 M bis ≤ 1,2 M, verwendbar. In einer besonders bevorzugten Ausführungsform wird Lithium-2-pentafluoroethoxy-1,1,2,2-tetrafluor-ethansulfonat in Konzentration von 1 M verwendet. Primäre und sekundäre Lithium-basierte Energiespeicher sind vorzugsweise ausgewählt aus der Gruppe umfassend Lithium-Batterien, Lithium-Ionen-Batterien, Lithium-Ionen-Akkumulatoren, Lithium-Polymer-Batterien und/oder Lithium-Ionen-Kondensatoren. Insbesondere ist Lithium-2-pentafluoroethoxy-1,1,2,2-tetrafluor-ethansulfonat als Leitsalz für eine Lithium-Ionen Batterie oder einen Lithium-Ionen Akkumulator verwendbar.

Beispiele und Figuren, die der Veranschaulichung der vorliegenden Erfindung dienen, sind nachstehend angegeben.

Hierbei zeigen die Figuren:

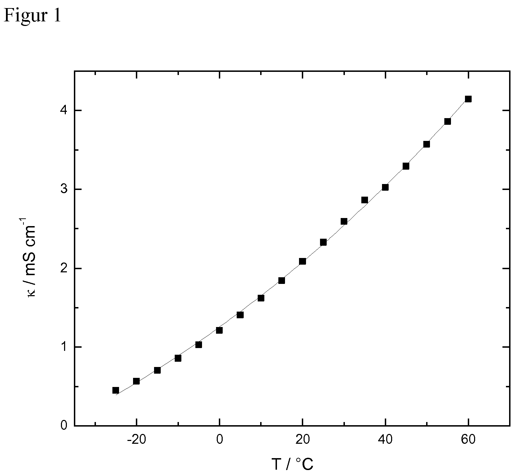

- Figur 1: zeigt Leitfähigkeit (κ) einer 1 M Lösung von Lithium-2-pentafluoroethoxy-1,1,2,2-tetrafluor-ethansulfonat in einem Lösungsmittelgemisch aus Ethylencarbonat (45 %), gamma-Butyrolacton (45 %) und Fluorethylencarbonat (10 %) in Abhängigkeit von der Temperatur.

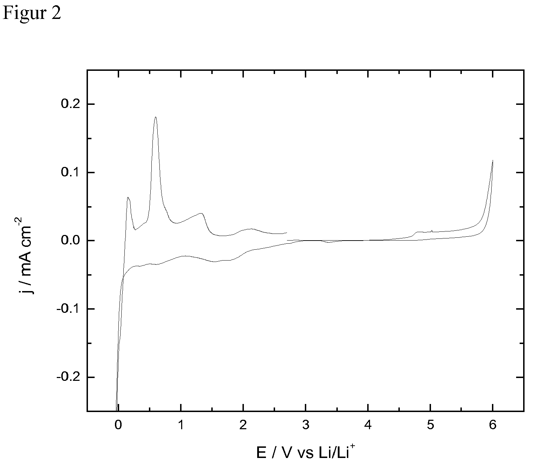

- Figur 2: zeigt das elektrochemische Stabilitätsfenster einer 1 M Lösung von Lithium-2-pentafluoroethoxy-1,1,2,2-tetrafluor-ethansulfonat in einem Lösungsmittelgemisch aus Ethylencarbonat (45 %), gamma-Butyrolacton (45 %) und Fluorethylencarbonat (10 %).

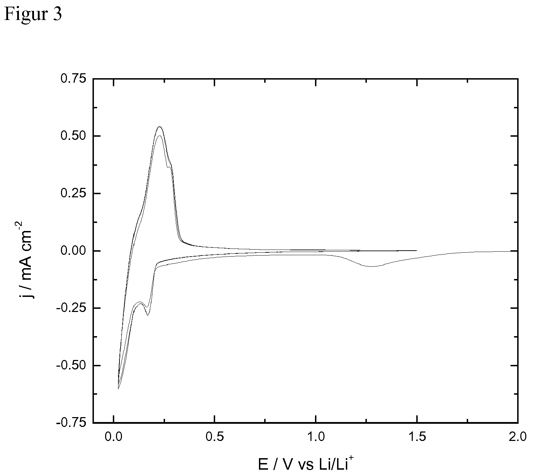

- Figur 3: zeigt die zyklische Voltammetrie einer 1 M Lösung von Lithium-2-pentafluoroethoxy-1,1,2,2-tetrafluor-ethansulfonat in einem Lösungsmittelgemisch aus Ethylencarbonat (45 %), gamma-Butyrolacton (45 %) und Fluorethylencarbonat (10 %).

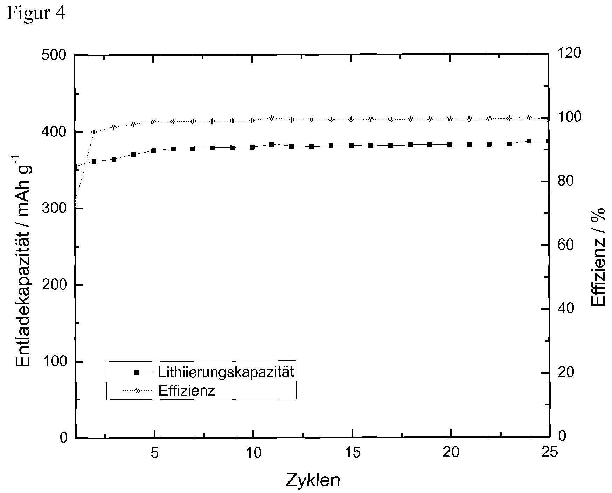

- Figur 4: zeigt die Entladekapazität und die Effizienz einer Lithium-Ionen Halbzelle mit 1 M Lithium-2-pentafluoroethoxy-1,1,2,2-tetrafluor-ethansulfonat in einem Lösungsmittelgemisch aus Ethylencarbonat(45 %), gamma-Butyrolacton (45 %) und Fluoroethylencarbonat (10 %). Als Arbeitselektrode diente das Anodenmaterial graphitischer Kohlenstoff.

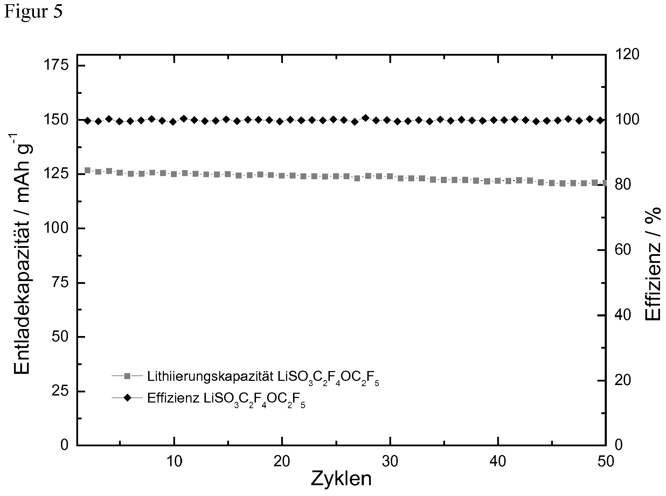

- Figur 5: zeigt die Entladekapazität und die Effizienz einer Lithium-Ionen Halbzelle mit 1 M Lithium-2-pentafluoroethoxy-1,1,2,2-tetrafluor-ethansulfonat (LiSO₃C₂F₄OC₂F₅) in einem Lösungsmittelgemisch aus Ethylencarbonat, gamma- Butyrolacton und Fluoroethylencarbonat im Verhältnis 4,5:4,5:1. Als Arbeitselektrode diente das Kathodenmaterial Nickel-Mangan-Kobaltoxid.

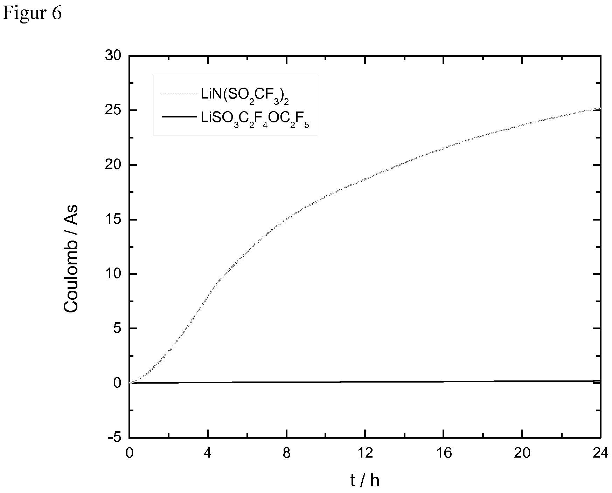

- Figur 6: zeigt den Zersetzungsstrom von Korrosionsmessungen gegen Aluminium durchgeführt mit 1 M Lithium-2-pentafluoroethoxy-1,1,2,2-tetrafluor-ethansulfonat (LiSO₃C₂F₄OC₂F₅) in einem Lösungsmittelgemisch aus Ethylencarbonat (45 %), gamma-Butyrolacton (45 %) und Fluoroethylencarbonat (10 %) sowie mit dem bekannten korrosiven Leitsalz Lithium-bis(trifluormethansulfon)imid (LiN(SO₂CF₃)₂, LiTFSI).

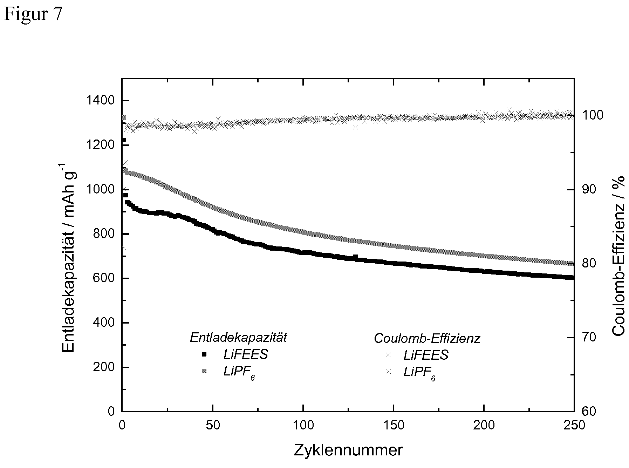

- Figur 7: zeigt die Entladekapazität und die Effizienz zweier Lithium-Ionen Halbzellen, unter Verwendung von 1 M Lithium-2-pentafluoroethoxy-1,1,2,2-tetrafluor-ethansulfonat (LiFEES) und 1 M Lithiumhexafluorophosphat (LiPF₆), jeweils in einem Lösungsmittelgemisch aus Ethylencarbonat (45 %), γ-Butyrolacton (45 %) und Fluoroethylencarbonat (10 %). Als Arbeitselektrode diente jeweils ein Silizium-Graphit-Komposit Anodenmaterial.

### Beispiel 1

Herstellung von Lithium-2-pentafluoroethoxy-1,1,2,2-tetrafluor-ethansulfonat
15 g Perfluoro(2-ethoxyethan)sulfonsäure (ABCR, 95%) wurden mit 2,01 g Lithiumhydroxid (Sigma-Aldrich, reagent grade, ≥ 98%) in 50 ml Milli-Q Wasser (Millipore) gemischt und 2 Stunden bei 50°C gerührt. Nach Abziehen des Wassers und Umkristallisation aus Acetonitril erhielt man Lithium-2-pentafluoroethoxy-1,1,2,2-tetrafluor-ethansulfonat als farblose Kristalle. Durch erneutes Lösen und Abziehen des Lösungsmittels lag das Salz als weißes Pulver vor, welches vor Gebrauch für 24 Stunden bei 80 °C getrocknet wurde.

### Beispiel 2

Bestimmung der Leitfähigkeit von Lithium-2-pentafluoroethoxy-1,1,2,2-tetrafluorethansulfo nat

Die Leitfähigkeit einer 1 M Lösung des gemäß Beispiel 1 hergestellten Lithium-2-pentafluoroethoxy-1,1,2,2-tetrafluor-ethansulfonat wurde in einem Lösungsmittelgemisch aus Ethylencarbonat (45 Gew.-%), gamma-Butyrolacton (45 Gew.-%) und Fluoroethylencarbonat (10 Gew.-%) in einem Temperaturbereich von - 25°C bis + 60°C bestimmt.

Eine Mischung von 45 Gew.-% Ethylencarbonat (EC) (Ferro Corporation, Batteriegrad), 45 Gew.-% gamma-Butyrolacton (γBL) (Ferro Corporation, Batterygrade) und 10 Gew.-% Fluoroethylencarbonat (Solvay GmbH) wurden vorgelegt. In diesem Lösungsmittelgemisch wurden pro Milliliter 322,1 mg des gemäß Beispiel 1 hergestellten Lithium-2-pentafluoroethoxy-1,1,2,2-tetrafluor-ethansulfonats gelöst, so dass sich eine Konzentration von 1 M des Lithiumsalzes ergab.

Die Leitfähigkeit des Elektrolyten wurde unter Verwendung von Platin-Leitfähigkeitsmesszellen (Amel Glassware, Zellkonstante 1 cm⁻¹) mit einem Potentiostaten (Solartron 1287A) in Verbindung mit einer Impedanzmesseinheit (Solartron 1260) in einem Temperaturbereich von - 25°C bis + 60°C (Klimaschrank, Binder MK53) untersucht. Hierzu wurden die Leitfähigkeitsmesszellen zunächst auf 60°C erwärmt und dann in Temperaturintervallen von 5°C auf -25°C gekühlt.

Die Figur 1 zeigt den Verlauf der Leitfähigkeit κ im Temperaturbereich von -25°C - +60°C in dem Lösungsmittelgemisch Ethylencarbonat, gamma-Butyrolacton und Fluoroethylencarbonat EC:γBL:FEC (4,5:4,5:1). Die Leitfähigkeit von 1 M Lithium-2-pentafluoroethoxy-1,1,2,2-tetrafluor-ethansulfonat in diesem Gemisch betrug bei 25°C ca. 2,4 mS cm⁻¹. Dies zeigt, dass Lithium-2-pentafluoroethoxy-1,1,2,2-tetrafluor-ethansulfonat in den üblichen Carbonat-Lösungsmitteln eine ausreichende Leitfähigkeit bei 25°C aufweist.

### Beispiel 3

Bestimmung der elektrochemischen Stabilität von Lithium-2-pentafluoroethoxy-1,1,2,2-tetrafluor-ethansulfonat

Die elektrochemische Stabilität einer 1 M-Lösung des gemäß Beispiel 1 hergestellten Lithium-2-pentafluoroethoxy-1,1,2,2-tetrafluor-ethansulfonat in einem Lösungsmittelgemisch aus Ethylencarbonat (45 Gew.-%), gamma-Butyrolacton (45 Gew.-%) und Fluoroethylencarbonat (10 Gew.-%) (EC:γBL:FEC, 4,5:4,5:1) wurde mittels der sogenannten Linear Sweep-Voltammetrie (LSV) bestimmt. Bei diesem Verfahren erfolgt eine kontinuierliche Änderung der Elektrodenspannung (linear sweep).

Als kathodisches Stabilitätslimit, das Potential, bei welchem eine Reduktion einsetzt, wurde jenes Potential definiert, bei welchem die Stromdichte - 0,1 mA cm⁻² unterschritt. Als anodisches Stabilitätslimit, das Potential, bei welchem eine Oxidation einsetzt, wurde jenes Potential definiert, bei welchem die Stromdichte + 0,1 mA cm⁻² überschritt. Insbesondere die anodische Stabilität hängt entscheidend von der Stabilität des verwendeten Elektrolyten ab.

Die Versuche wurden in einer 3-Elektrodenanordnung in modifizierte Swagelok®-T-Stücke (Rohrverbinder, Edelstahlkörper) mit einer Platinelektrode (eDAQ, Modell ET075, 1 mm Durchmesser) als Arbeitselektrode und Lithiumfolie (12 mm bzw. 7 mm Durchmesser, Chemetall) als Gegen- und Referenzelektrode durchgeführt. Dazu wurde der Zellkörper mit einer einseitig silikonierten Polyester-Folie (Mylar®, PPI-SP 914, 100 µm) ausgekleidet und die Elektroden in den Zellkörper eingeführt. Die Elektroden wurden mit einem Vlies (Freudenberg®, FS2226E, 6 Lagen) separiert, welches mit dem entsprechenden Elektrolyten getränkt war. Die Vorschubgeschwindigkeit betrug 1 mV s⁻¹.

Wie in Figur 2 gezeigt ist, wurde bei dem Elektrolyten 1 M Lithium-2-pentafluoroethoxy-1,1,2,2-tetrafluor-ethansulfonat in EC:γBL:FEC, 4,5:4,5:1 das kathodische Stabilitätslimit bei 0,015 V erreicht. Die anodische Stabilität von Lithium-2-pentafluoroethoxy-1,1,2,2-tetrafluor-ethansulfonat betrug 5,97 V. Diese anodische Stabilität erlaubt eine Verwendung des Elektrolyten in Kombination mit Hochvoltkathodenmaterialien.

Dieses Ergebnis zeigt, dass Lithium-2-pentafluoroethoxy-1,1,2,2-tetrafluor-ethansulfonat in den üblichen Carbonat-Lösungsmitteln eine für sämtliche elektrochemischen Anwendungen ausreichend gute elektrochemischen Stabilität aufweist.

### Beispiel 4

### Zyklische Voltammetrie

Das zyklische Voltammetrie einer 1 M-Lösung des gemäß Beispiel 1 hergestellten Lithium-2-pentafluoroethoxy-1,1,2,2-tetrafluor-ethansulfonats wurde in einem Lösungsmittelgemisch aus 45 Gew.-% Ethylencarbonat, 45 Gew.-% gamma-Butyrolacton und 10 Gew.-% Fluoroethylencarbonat (EC:γBL:FEC, 4,5:4,5:1) durchgeführt.

Die Versuche wurden in einer 3-Elektrodenanordnung in modifizierte Swagelok®-T-Stücke (Rohrverbinder, Edelstahlkörper) mit einer Graphitelektrode (Timcal T44 Graphitmaterial) als Arbeitselektrode und Lithiumfolie (12 mm bzw. 4 mm Durchmesser, Chemetall) als Gegen- und Referenzelektrode durchgeführt. Dazu wurde der Zellkörper mit einer einseitig silikonierten Polyester-Folie (Mylar®, PPI-SP 914, 100 µm) ausgekleidet und die Elektroden in den Zellkörper eingeführt. Die Elektroden wurden mit einem Vlies (Freudenberg®, FS2226E, 6 Lagen) separiert, welches mit dem entsprechenden Elektrolyten getränkt war. Die Figur 3 zeigt die Ergebnisse der zyklische Voltammetrie. In der Figur 3 sind die durch die erhöhte Stromdichte identifizierbaren Interkalations- und Deinterkalationsphasen im Bereich zwischen 0 und 0,3 V erkennbar. Dies belegt die Reversibilität des Systems. Zusätzlich kann aus dem Graphen die Zersetzung des Fluoroethylencarbonat (FEC) im ersten Zyklus entnommen werden.

### Beispiel 5

Bestimmung des Zyklisierverhaltens von Lithium-2-pentafluoroethoxy-1,1,2,2-tetrafluor-ethansulfonat mit Graphitelektrode

Das Zyklisierverhalten einer 1 M-Lösung des gemäß Beispiel 1 hergestellten Lithium-2-pentafluoroethoxy-1,1,2,2-tetrafluor-ethansulfonats wurde in einem Gemisch von jeweils 45 Gew.-% Ethylencarbonat und gamma-Butyrolacton (yBL) und 10 Gew.-% Fluorethylencarbonat (FEC) bestimmt.

Die Versuche wurden in einer 3-Elektrodenanordnung in modifizierte Swagelok®-T-Stücke (Rohrverbinder, Edelstahlkörper) mit einer Graphitelektrode (Timcal T44 Graphitmaterial) als Arbeitselektrode und Lithiumfolie (12 mm bzw. 5 mm Durchmesser, Chemetall) als Gegen- und Referenzelektrode durchgeführt. Dazu wurde der Zellkörper mit einer einseitig silikonierten Polyester-Folie (Mylar®, PPI-SP 914, 100 µm) ausgekleidet und die Elektroden in den Zellkörper eingeführt. Die Elektroden wurden mit einem Vlies (Freudenberg®, FS2226E, 6 Lagen) separiert, welches mit dem entsprechenden Elektrolyten getränkt war.

Der Test zum Zyklisierverhalten durchläuft mehrere Phasen. In der ersten Phase wurde die Formierung des Graphits (SEI Formation) durch drei Zyklen mit einer Konstantstrom C-Rate von C/5 sichergestellt. Im Anschluss wurde in der zweiten Phase über 20 Zyklen das Zyklisierverhalten bei einer Lade- und Entladerate von 1 C überprüft. Dabei wurde das Zellsystem nach dem Laden für eine Stunde bei einer Spannung von 0,025 V gehalten. In der dritten Phase wurde der Graphite immer mit C/2 geladen und im Anschluss für eine Stunde bei 0,025 V gehalten bevor der Graphit mit unterschiedlichen Geschwindigkeiten entladen wurde. Die angewendeten D-Raten (Entladeraten) waren dabei D/5, D/3; D/2, 1D, 2D, 3D, 5D und 10D. Dem D-Ratentest folgten fünf Zyklen mit Lade- und Entladeraten von C/5, um zu überprüfen ob der Graphit durch den Belastungstest Schaden genommen hatte. Die letzte Phase beinhaltete die gleichen Zyklisierparameter wie Phase 2, wurde aber 30 Zyklen durchgeführt.

In der Figur 4 sind die Entladekapazität und die Effizienz gegen die Zyklenzahl der mit einer C-Rate von 1 C geladenen Lithiumionen-Batteriehalbzelle dargestellt. Wie die Figur 4 zeigt, wies die Halbzelle mit 1 M Lithium-2-pentafluoroethoxy-1,1,2,2-tetrafluor-ethansulfonat eine Anfangskapazität von ca. 370 mAh g⁻¹ nach dem Formieren der Zelle auf, die mit der Anzahl der Zyklen auf ca. 380 mAh g⁻¹ im 11. Zyklus stieg.

Weiterhin stieg die Effizienz der Zelle nach drei Zyklen auf über 99 % einer maximalen Effizienz von 100 %. Insbesondere zeigte die Zelle eine hervorragende Zyklenstabilität.

### Beispiel 6

Bestimmung des Zyklisierverhaltens von Lithium-2-pentafluoroethoxy-1,1,2,2-tetrafluor-ethansulfonat mit NCM-Kathode

Das Zyklisierverhalten auf NCM-Kathoden in einer Halbzelle wurde wie in Beispiel 5 dargestellt in einer 3-Elektrodenanordnung durchgeführt, wobei eine Nickel-Cobalt-Manganoxid-Elektrode (NCM-Elektrode, Toda Kogyo Europe GmbH) als Arbeitselektrode und Lithiumfolie (12 mm bzw. 5 mm Durchmesser, Chemetall) als Gegen- und Referenzelektrode verwendet wurde. Hierbei wurde eine 1 M-Lösung des gemäß Beispiel 1 hergestellten Lithium-2-pentafluoroethoxy-1,1,2,2-tetrafluor-ethansulfonats in einem Gemisch von jeweils 45 Gew.-% Ethylencarbonat und gamma-Butyrolacton (yBL) und 10 Gew.-% Fluorethylencarbonat (FEC) verwendet.

Zum Vergleich wurde ebenfalls das Zyklisierverhalten einer 1 M-Lösung von LiPF₆ (Sigma Aldrich, Batterygrade) in einem Gemisch von jeweils 45 Gew.-% Ethylencarbonat und gamma-Butyrolacton (yBL) und 10 Gew.-% Fluorethylencarbonat (FEC) wie in Beispiel 5 dargestellt in einer 3-Elektrodenanordnung mit einer Nickel-Cobalt-Manganoxid-Elektrode (NCM-Elektrode, Toda Kogyo Europe GmbH) als Arbeitselektrode und Lithiumfolie (12 mm bzw. 5 mm Durchmesser, Chemetall) als Gegen- und Referenzelektrode durchgeführt.

Die Figur 5 zeigt die Entladekapazität und die Effizienz der Lithium-Ionen Halbzelle mit 1 M Lithium-2-pentafluoroethoxy-1,1,2,2-tetrafluor-ethansulfonat (LiSO₃C₂F₄OC₂F₅).

Wie die Figur 5 zeigt, wies die Halbzelle mit 1 M Lithium-2-pentafluoroethoxy-1,1,2,2-tetrafluor-ethansulfonat eine Anfangskapazität von ca. 126 mAh g⁻¹ nach dem Formieren der Zelle auf, die mit der Anzahl der Zyklen auf ca. 118 mAh g⁻¹ im 70. Zyklus fiel. Weiterhin stieg die Effizienz der Zelle nach drei Zyklen auf über 99 % einer maximalen Effizienz von 100 %. Es konnte festgestellt werden, dass die Zelle auch mit NCM-Kathode eine hervorragende Zyklenstabilität zeigte.

### Beispiel 7

Bestimmung des Korrosionsverhaltens von Lithium-2-pentafluoroethoxy-1,1,2,2-tetrafluorethansulfo nat

Das Korrosionsverhalten des gemäß Beispiel 1 hergestellten Lithium-2-pentafluoroethoxy-1,1,2,2-tetrafluor-ethansulfonat in Bezug auf Aluminium wurde im Vergleich zu dem als korrosiv bekannten Lithium Bis(Trifluormethansulfonyl)imid (LiN(SO₂CF₃)₂, LiTFSI) bestimmt.

Verwendet wurde jeweils eine 1 M-Lösung des gemäß Beispiel 1 hergestellten Lithium-2-pentafluoroethoxy-1,1,2,2-tetrafluor-ethansulfonats und LiTFSI in einem Lösungsmittelgemisch aus Ethylencarbonat (45 Gew.-%), gamma-Butyrolacton (45 Gew.-%) und Fluoroethylencarbonat (10 Gew.-%) (EC:γBL:FEC, 4,5:4,5:1).

Zur Messung der Aluminiumkorrosionseigenschaften der Elektrolyten wurden 3-Elektrodenzellen (modifizierte Swagelok®-T-Stücke, Edelstahlkörper) mit Aluminiumfolie (12 mm bzw. 7 mm Durchmesser) als Arbeitselektrode und Lithiumfolie (12 mm bzw. 7 mm Durchmesser, Chemetall) als Gegen- und Referenzelektrode hergestellt. durchgeführt. Dazu wurde der Zellkörper mit einer einseitig silikonierten Polyester-Folie (Mylar®, PPI-SP 914, 100 µm) ausgekleidet und die Elektroden in den Zellkörper eingeführt. Die Elektroden wurden mit einem Vlies (Freudenberg®, FS2226E, 6 Lagen) separiert, welches mit dem entsprechenden Elektrolyten getränkt war.

Bei der Leerlaufspannung der Zelle startend wurde das Potential in 100 mV-Schritten mit 1 mV s⁻¹ erhöht und anschließend das jeweilige Potential für eine Stunde gehalten bis schlussendlich die Endspannung von 5 V erreicht wurde. Die Spannung wurde dann für 24 Stunden konstant gehalten. Die Figur 6 zeigt den Zersetzungsstrom von Korrosionsmessungen gegen Aluminium für 1 M Lithium-2-pentafluoroethoxy-1,1,2,2-tetrafluor-ethansulfonat (LiSO₃C₂F₄OC₂F₅) und für das bekannter Weise korrosive Lithiumbis(trifluormethansulfon)imid (LiN(SO₂CF₃)₂, LiTFSI).

Wie in Figur 6 gezeigt ist, stieg der Zersetzungsstrom auf der Aluminiumfolie bei der Verwendung von LiTFSI als Leitsalz an. Dieser Effekt ist auf Aluminiumkorrosion zurückzuführen. Demgegenüber blieb der gemessene Strom bei der Verwendung von 1 M Lithium-2-methoxy-1,1,2,2-tetrafluor-ethansulfonat im Elektrolyten konstant niedrig. Dieses Ergebnis zeigt, dass bei der Verwendung von 1 M Lithium-2-methoxy-1,1,2,2-tetrafluor-ethansulfonat im Elektrolyten eine Korrosion von Aluminium vermieden werden kann.

### Beispiel 8

### Thermische Stabilität

Für die Untersuchung der thermischen Alterung wurde eine 1 M-Lösung des gemäß Beispiel 1 hergestellten Lithium-2-pentafluoroethoxy-1,1,2,2-tetrafluor-ethansulfonats in einem Lösungsmittelgemisch aus 45 Gew.-% Ethylencarbonat, 45 Gew.-% gamma-Butyrolacton und 10 Gew.-% Fluoroethylencarbonat (EC:γBL:FEC, 4,5:4,5:1) hergestellt. 400µl dieser Mischung wurden in ein NMR-Röhrchen überführt und im Anschluss für zwei Wochen bei 60 °C in einer Klimakammer gelagert. Im Anschluss wurde die Probe mit Hilfe eines Bruker Avance III 400 MHz Spektrometers vermessen und das Ergebnis mit der Messung einer ungealterten Probe der Mischung verglichen.

Es konnte festgestellt werden, dass die thermische Stabilität von 1 M Lithium-2-methoxy-1,1,2,2-tetrafluor-ethansulfonat die Stabilität des LiPF₆ Elektrolyten überstieg, da sich die Zusammensetzung des Elektrolyten innerhalb der 2 Wochen nicht verändert hatte bzw. keine neuen Verbindungen innerhalb der Mischung nachweisbar waren.

### Beispiel 9

Bestimmung des Zyklisierverhaltens von Lithium-2-pentafluoroethoxy-1,1,2,2-tetrafluor-ethansulfonat mit Silizium-Graphit-Kompositelektrode.

Das Zyklisierverhalten einer 1 M-Lösung des gemäß Beispiel 1 hergestellten Lithium-2-pentafluoroethoxy-1,1,2,2-tetrafluor-ethansulfonats wurde ferner unter Verwendung einer Silizium-Graphit-Kompositelektrode in einem Gemisch von jeweils 45 Gew.-% Ethylencarbonat und gamma-Butyrolacton (γ-BL) und 10 Gew.-% Fluorethylencarbonat (FEC) bestimmt.

Die Versuche wurden in einer 3-Elektrodenanordnung in modifizierte Swagelok®-T-Stücke (Rohrverbinder, Edelstahlkörper) mit einer Silizium-Graphit-Kompositelektrode (Evonik Siliziummaterial 20%, Timcal SFG6 Graphitmaterial 60%) als Arbeitselektrode und Lithiumfolie (12 mm bzw. 5 mm Durchmesser, Chemetall) als Gegen- und Referenzelektrode durchgeführt. Dazu wurde der Zellkörper mit einer einseitig silikonierten Polyester-Folie (Mylar®, PPI-SP 914, 100 µm) ausgekleidet und die Elektroden in den Zellkörper eingeführt. Die Elektroden wurden mit einem Vlies (Whatman®) separiert, welches mit dem entsprechenden Elektrolyten getränkt war.

Zum Vergleich wurde das Zyklisierverhalten einer 1 M-Lösung von LiPF₆ (Sigma Aldrich, Batterygrade) in selbigem Gemisch von jeweils 45 Gew.-% Ethylencarbonat und gamma-Butyrolacton (γ-BL) und 10 Gew.-% Fluorethylencarbonat (FEC) ebenso wie vorab beschrieben in einer 3-Elektrodenanordnung mit einer Silizium-Graphit-Kompositelektrode (Evonik Siliziummaterial 20%, Timcal SFG6 Graphitmaterial 60%) als Arbeitselektrode und Lithiumfolie (12 mm bzw. 5 mm Durchmesser, Chemetall) als Gegen- und Referenzelektrode durchgeführt.

Der Test zum Zyklisierverhalten durchlief im ersten Zyklus eine Formierung des Silizium-Graphit-Kompositmaterials (SEI Formation) mit einer Konstantstrom C-Rate von C/5. Im Anschluss wurde das Zyklisierverhalten bei einer Lade- und Entladerate von 1 C über einen Zeitraum von 250 Zyklen beobachtet.

Die Figur 7 zeigt die Entladekapazität und die Effizienz der Lithium-Ionen Halbzellen unter Verwendung von 1 M Lithium-2-pentafluoroethoxy-1,1,2,2-tetrafluor-ethansulfonat (LiFEES) und 1 M LiPF₆. Wie die Figur 7 zeigt, wies die Halbzelle mit 1 M LiFEES in EC: γ-BL (1:1, 10 % FEC) eine Anfangskapazität von ca. 940 mAh g⁻¹ nach dem Formieren der Zelle auf, die während der folgenden 10 Zyklen auf ca. 895 mAh g⁻¹ fiel und sich bei diesem Wert kurzzeitig stabilisierte. Die 80% der anfänglichen Kapazität wurden nach 75 Zyklen erreicht. Die Effizienz der Zelle betrug 90% im ersten Zyklus, stieg nach drei Zyklen auf über 98% und erreichte nach 15 Zyklen eine maximale Effizienz von annähernd 100 %. Die Vergleichszelle mit 1 M LiPF₆ wies eine Anfangskapazität von ca. 1080 mAh g⁻¹ nach dem Formieren der Zelle auf, die während 70 Zyklen auf 80% der anfänglichen Kapazität fiel.

Dies zeigt, dass die Verwendung von 1 M Lithium-2-pentafluoroethoxy-1,1,2,2-tetrafluor-ethansulfonat auch in einer Zelle mit Silizium-Graphit-Anodenmaterial eine hervorragende und eine LiPF₆ entsprechende Zyklenstabilität und eine mit LiPF₆ vergleichbare Kapazität zeigte.

Diese Ergebnisse zeigen insgesamt, dass Lithium-2-pentafluoroethoxy-1,1,2,2-tetrafluor-ethansulfonat eine Möglichkeit bietet, LiPF₆ als Leitsalz in Lithium-Ionen Batterien zu ersetzen.

## Patentansprüche

1. Elektrolyt für einen Lithium-basierten Energiespeicher umfassend Lithium-2-pentafluoroethoxy-1,1,2,2-tetrafluor-ethansulfonat.

2. Elektrolyt nach Anspruch 1, **dadurch gekennzeichnet, dass** die Konzentration von Lithium-2-pentafluoroethoxy-1,1,2,2-tetrafluor-ethansulfonat im Elektrolyten im Bereich von ≥ 0,1 M bis ≤ 2 M, vorzugsweise im Bereich von ≥ 0,5 M bis ≤ 1,5 M, besonders bevorzugt im Bereich von ≥ 0,7 M bis ≤ 1,2 M, liegt.

3. Elektrolyt nach Anspruch 1 oder 2, **dadurch gekennzeichnet, dass** der Elektrolyt ein organisches Lösungsmittel, eine ionische Flüssigkeit und/oder eine Polymermatrix umfasst.

4. Elektrolyt nach einem der vorherigen Ansprüche, **dadurch gekennzeichnet, dass** das organische Lösungsmittel ausgewählt ist aus der Gruppe umfassend Ethylencarbonat, Propylencarbonat, Diethylcarbonat, Dimethylcarbonat, Ethylmethylcarbonat, Acetonitril, Glutaronitril, Adiponitril, Pimelonitril, gamma-Butyrolacton, gamma-Valerolacton, Dimethoxyethan, 1,3-Dioxolan, Methylacetat und/oder Mischung davon, vorzugsweise aus der Gruppe umfassend Ethylencarbonat, Diethylcarbonat, Dimethylcarbonat, Ethylmethylcarbonat und/oder deren Mischungen.

5. Elektrolyt nach einem der vorherigen Ansprüche, **dadurch gekennzeichnet, dass** das organische Lösungsmittel eine Mischung aus Ethylencarbonat und wenigstens einem weiteren organischen Lösungsmittel vorzugsweise gamma-Butyrolacton umfasst, bevorzugt in einem Verhältnis im Bereich von ≥ 1:99 bis ≤ 99:1, bevorzugt im Bereich von ≥ 1:9 bis ≤ 9:1, vorzugsweise im Bereich von ≥ 3:7 bis ≤ 1:1.

6. Elektrolyt nach einem der vorherigen Ansprüche, **dadurch gekennzeichnet, dass** der Elektrolyt eine Verbindung ausgewählt aus der Gruppe umfassend Chlorethylencarbonat, Fluorethylencarbonat, Vinylethylencarbonat, Ethylensulfit, Ethylensulfat, Propansulfonate, Sulfite, vorzugsweise Dimethylsulfit und Propylensulfit, Sulfate, optional mit F, Cl oder Br substituierte Butyrolactone, Phenylethylencarbonat, Vinylacetat und/oder Trifluorpropylencarbonat umfasst.

7. Lithium-basierter Energiespeicher, vorzugsweise Lithium-Batterie, Lithium-Ionen-Batterie, Lithium-Ionen-Akkumulator, Lithium-Polymer-Batterie oder Lithium-Ionen-Kondensator, umfassend Lithium-2-pentafluoroethoxy-1,1,2,2-tetrafluor-ethansulfonat.

8. Verwendung von Lithium-2-pentafluoroethoxy-1,1,2,2-tetrafluor-ethansulfonat in Lithium-basierten Energiespeichern.

9. Verwendung nach Anspruch 8, **dadurch gekennzeichnet, dass** die Konzentration von Lithium-2-pentafluoroethoxy-1,1,2,2-tetrafluor-ethansulfonat im Bereich von ≥ 0,1 M bis ≤ 2 M, vorzugsweise im Bereich von ≥ 0,5 M bis ≤ 1,5 M, besonders bevorzugt im Bereich von ≥ 0,7 M bis ≤ 1,2 M, liegt.

10. Verwendung nach Anspruch 8 oder 9, **dadurch gekennzeichnet, dass** die Lithium-basierten Energiespeicher ausgewählt sind aus der Gruppe umfassend Lithium-Batterien, Lithium-Ionen-Batterien, Lithium-Ionen-Akkumulatoren, Lithium-Polymer-Batterien und/oder Lithium-Ionen-Kondensatoren.

## Claims

1. Electrolyte for lithium-based energy storage means comprising lithium 2-pentafluoroethoxy-1,1,2,2-tetrafluoroethanesulfonate.

2. Electrolyte according to Claim 1, **characterized in that** the concentration of lithium 2-pentafluoroethoxy-1,1,2,2-tetrafluoroethanesulfonate in the electrolyte is in the range from ≥ 0.1 M to ≤ 2 M, preferably in the range from ≥ 0.5 M to ≤ 1.5 M, more preferably in the range from ≥ 0.7 M to ≤ 1.2 M.

3. Electrolyte according to Claim 1 or 2, **characterized in that** the electrolyte comprises an organic solvent, an ionic liquid and/or a polymer matrix.

4. Electrolyte according to any of the preceding claims, **characterized in that** the organic solvent is selected from the group comprising ethylene carbonate, propylene carbonate, diethyl carbonate, dimethyl carbonate, ethyl methyl carbonate, acetonitrile, glutaronitrile, pimelonitrile, gamma-butyrolactone, gamma-valerolactone, dimethoxyethane, 1,3-dioxolane, methyl acetate and/or a mixture thereof, preferably from the group comprising ethylene carbonate, diethyl carbonate, dimethyl carbonate, ethyl methyl carbonate and/or mixtures thereof.

5. Electrolyte according to any of the preceding claims, **characterized in that** the organic solvent comprises a mixture of ethylene carbonate and at least one further organic solvent, preferably gamma-butyrolactone, preferably in a ratio in the range from ≥ 1:99 to ≤ 99:1, preferably in the range from ≥ 1:9 to ≤ 9:1, preferably in the range from ≥ 3:7 to ≤ 1:1.

6. Electrolyte according to any of the preceding claims, **characterized in that** the electrolyte comprises a compound selected from the group comprising chloroethylene carbonate, fluoroethylene carbonate, vinylethylene carbonate, ethylene sulfite, ethylene sulfate, propanesulfonates, sulfites, preferably dimethyl sulfite and propylene sulfite, sulfates, optionally F-, Cl- or Br-substituted butyrolactones, phenylethylene carbonate, vinyl acetate and/or trifluoropropylene carbonate.

7. Lithium-based energy storage means, preferably lithium battery, lithium ion battery, lithium ion accumulator, lithium polymer battery or lithium ion capacitor, comprising lithium 2-pentafluoroethoxy-1,1,2,2-tetrafluoroethanesulfonate.

8. Use of lithium 2-pentafluoroethoxy-1,1,2,2-tetrafluoroethanesulfonate in lithium-based energy storage means.

9. Use according to Claim 8, **characterized in that** the concentration of lithium 2-pentafluoroethoxy-1,1,2,2-tetrafluoroethanesulfonate is in the range from ≥ 0.1 M to ≤ 2 M, preferably in the range from ≥ 0.5 M to ≤ 1.5 M, more preferably in the range from ≥ 0.7 M to ≤ 1.2 M.

10. Use according to Claim 8 or 9, **characterized in that** the lithium-based energy storage means are selected from the group comprising lithium batteries, lithium ion batteries, lithium ion accumulators, lithium polymer batteries and/or lithium ion capacitors.

## Revendications

1. Électrolyte pour un accumulateur d'énergie à base de lithium, comprenant du 2-pentafluoroéthoxy-1,1,2,2-tétrafluoro-éthanesulfonate de lithium.

2. Electrolyte selon la revendication 1, **caractérisé en ce que** la concentration de 2-pentafluoroéthoxy-1,1,2,2-tétrafluoro-éthanesulfonate de lithium dans l'électrolyte se situe dans la plage de ≥ 0,1 M à ≤ 2 M, de préférence dans la plage de ≥ 0,5 M à ≤ 1,5 M, de façon particulièrement préférée dans la plage de ≥ 0,7 M à ≤ 1,2 M.

3. Electrolyte selon la revendication 1 ou 2, **caractérisé en ce que** l'électrolyte comprend un solvant organique, un liquide ionique et/ou une matrice polymère.

4. Electrolyte selon l'une quelconque des revendications précédentes, **caractérisé en ce que** le solvant organique est choisi dans le groupe comprenant le carbonate d'éthylène, le carbonate de propylène, le carbonate de diéthyle, le carbonate de diméthyle, le carbonate d'éthyle et de méthyle, l'acétonitrile, le glutaronitrile, l'adiponitrile, le pimélonitrile, la gamma-butyrolactone, la gamma-valérolactone, le diméthoxyéthane, le 1,3-dioxolane, l'acétate de méthyle et/ou un mélange de ceux-ci, de préférence dans le groupe comprenant la carbonate d'éthylène, la carbonate de diéthyle, le carbonate de diméthyle, le carbonate d'éthyle et de méthyle et/ou des mélanges de ceux-ci.

5. Electrolyte selon l'une quelconque des revendications précédentes, **caractérisé en ce que** le solvant organique comprend un mélange de carbonate d'éthylène et d'au moins un autre solvant organique, la gamma-butyrolactone de préférence, de préférence en un rapport dans la plage de ≥ 1:99 à ≤ 99:1, de préférence dans la plage de ≥ 1:9 à ≤ 9:1, de façon particulièrement préférée dans la plage de ≥ 3:7 à ≤ 1:1.

6. Electrolyte selon l'une quelconque des revendications précédentes, **caractérisé en ce que** l'électrolyte comprend un composé choisi dans le groupe comprenant le carbonate de chloréthylène, le carbonate de fluoroéthylène, le carbonate de vinyléthylène, le sulfite d'éthylène, le sulfate d'éthylène, des propanesulfonates, des sulfites, de préférence le sulfite de diméthyle et le sulfite de propylène, des sulfates, des butyrolactones en option substituées par F, Cl ou Br, le carbonate de phényléthylène, l'acétate de vinyle et/ou le carbonate de trifluoropropylène.

7. Accumulateur d'énergie à base de lithium, de préférence batterie au lithium, batterie lithium-ion, accumulateur lithium-ion, batterie lithium-polymère ou condensateur lithium-ion, comprenant du 2-pentafluoroéthoxy-1,1,2,2-tétrafluoro-éthanesulfonate de lithium.

8. Utilisation de 2-pentafluoroéthoxy-1,1,2,2-tétrafluoro-éthanesulfonate de lithium dans des accumulateurs d'énergie à base de lithium.

9. Utilisation selon la revendication 8, **caractérisée en ce que** la concentration de 2-pentafluoroéthoxy-1,1,2,2-tétrafluoro-éthanesulfonate de lithium se situe dans la plage de ≥ 0,1 M à ≤ 2 M, de préférence dans la plage de ≥ 0,5 M à ≤ 1,5 M, de façon particulièrement préférée dans la plage de ≥ 0,7 M à ≤ 1,2 M.

10. Utilisation selon la revendication 8 ou 9, **caractérisée en ce que** les accumulateurs d'énergie à base de lithium sont choisis dans le groupe comprenant des batteries au lithium, des batteries lithium-ion, des accumulateurs lithium-ion, des batteries lithium-polymère et/ou des condensateurs lithium-ion.
